# EUROPEAN PATENT SPECIFICATION

(11) **EP 0 446 957 B1**
(45) Date of publication and mention of the grant of the patent: **30.11.1994**
(21) Application number: 91104180.4
(22) Date of filing: 18.03.1991
(51) Int. Cl.: H02P 5/402, B66B 1/30

(54) **Procedure for regulating the speed reference of a voltage controlled squirrel-cage motor**
Prozedur zur Regelung der Sollgeschwindigkeit eines spannungsgeregelten Kurzschlussläufermotors
Procédure de régulation de la vitesse de référence d'un moteur à cage commandé en tension

(30) Priority: 16.03.1990 FI 901335
(43) Date of publication of application: 18.09.1991
(73) Proprietor: KONE Elevator GmbH, 6340 Baar (CH)
(72) Inventor: Suur-Askola, Seppo, SF-05820 Hyvinkää (FI); Lehtonen, Timo, SF-11100 Riihimäki (FI)
(74) Representative: Zipse + Habersack

(56) References cited:
- GB-A- 1 513 356
- GB-A- 1 524 298
- US-A- 4 373 610
- REGELUNGSTECHNIK vol. 28, no. 4, April 1980, München, DE, pp. 110-116 ; J. SCHÖRNER 'REGELUNG VON DREHSTROM-AUFZUGANLAGEN MIT DREHSTROMSTELLER'

## Description

The present invention relates to a procedure for regulating the speed reference of a stator-voltage controlled squirrel-cage motor for an elevator, as specified in the introductory part of claim 1.

The speed of a squirrel-cage elevator motor depends on the load, i.e. equals the synchronic speed plus/minus the slip. In the currently used regulation systems for squirrel-cage elevator motors, if the regulation system is to be kept active, the speed has to be defined as the difference between the synchronous speed and the maximum slip (e.g. 8%). This results in good passenger comfort because there are no incontinuity points in the operation, but the motor current is not sinusoidal and the motor becomes noisy. At the same time, the possibility of operating the motor in generator mode - and therefore also the potential energy provided by the down-travel of elevators e.g. in office buildings during afternoon peaks when the elevator cars are loaded to full capacity - is lost. Further, the motor size has to be somewhat increased as the same travelling speed has to be achieved with a lower rotational speed.

On the other hand, if the stator voltage is forced to a full value, a full speed and a sinusoidal motor current will be achieved, but the regulation system loses control of the situation as it no longer knows the magnitude of the load. A further drawback is the impact occurring at the beginning of braking, caused by controller saturation.

The object of the present invention is to eliminate the drawbacks referred to. The features characteristic of the invention are presented in the attached claim 1. Features of preferred embodiments of the invention are presented in the dependent claims.

The invention makes it possible to utilize:
- the energy saved by operating the motor in generator mode
- minimization of the motor size
- keeping the regulation system active without impacts
- sinusoidal motor current, reducing the noise level of the motor.

In the following, the invention is described in detail by the aid of an example, reference being made to the drawings attached, wherein

Fig. 1 represents an elevator drive.

Fig. 2a represents the motor current.

Fig. 2b represents the firing angle signal.

Fig. 2c represents the signal used for measuring the zero point of the motor current.

Fig. 2d represents the correction signal.

Fig. 3 illustrates the generation of the firing angle signal.

Figs. 4a and 4b illustrate the synchronization of the firing angle signal.

Fig. 5 illustrates the generation of the signal measuring the zero point of the motor current.

Fig. 6 illustrates the generation of the correction signal.

Fig. 7 shows a block diagram of a motor speed regulator utilizing a speed reference correction according to the invention.

Fig. 8 shows the interdependence of the signals used for generating the firing angle signal.

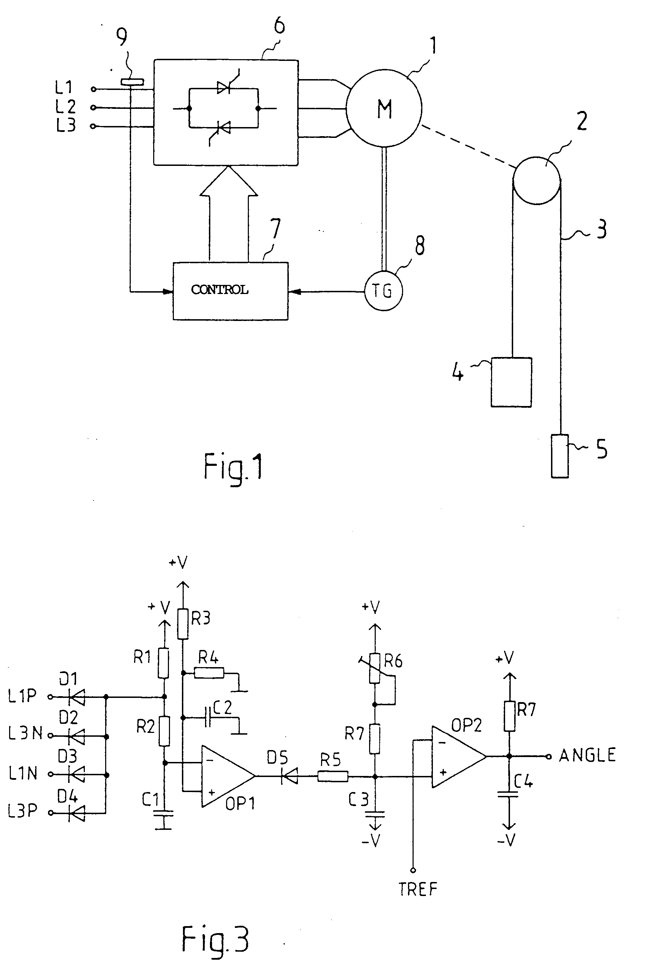

In the elevator drive illustrated by Fig. 1, a squirrel-cage motor (M) 1 rotates a traction sheave 2 driving an elevator car 4 and counterweight 5 suspended on lifting ropes 3. The squirrel-cage motor is fed by a voltage converter connected to the voltages L1, L2, L3 of a three-phase mains network. The voltage converter, provided with inverse-parallel connected thyristor pairs, is used for regulating the stator voltage of the motor, the thyristors in the power stage 6 are controlled by a control unit 7. The rotational speed of the motor is measured by a tachometer generator (TG) 8, and the phase current before the converter is measured by a current sensor 9 connected to phase L1.

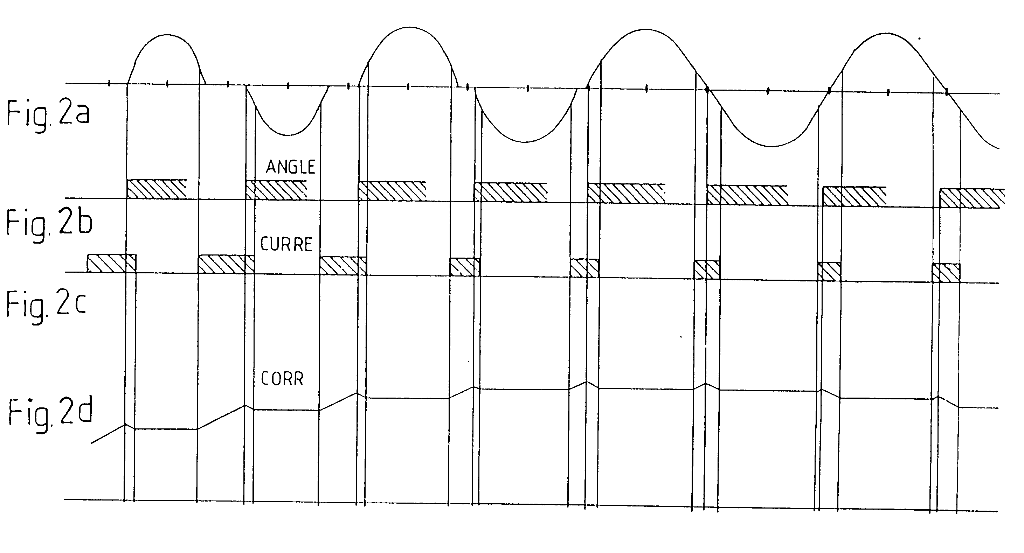

In the procedure of the invention, the control unit 7 adjusts the speed reference to a value at which the firing angle corresponds to the zero point of a sinusoidal motor current, i.e. to the so-called cos φ value when the elevator speed is near its maximum value, in other words, when the elevator speed exceeds 80% of its nominal top speed. Fig. 2a represents the motor current I. Generally, when the speed reference, respectively the firing angle of the thyristors is set to an arbitrary value the current is intermittent, as shown in the left part of Fig. 2a.

As the firing angle increases, the current wave form becomes sinusoidal towards the right-hand end. The pulse-shaped firing angle signal ANGLE shown in Fig. 2b is fixed to the cos φ point. In the case of sinusoidal motor current, the pulse-shaped signal CURRE measuring the zero point of the motor current (Fig. 2c) is a narrow pulse, the motor current zero point occurring at the middle of the "window" formed by this pulse. The speed reference correction signal CORR (Fig. 2d) corrects the speed reference during the current signal until the current becomes sinusoidal.

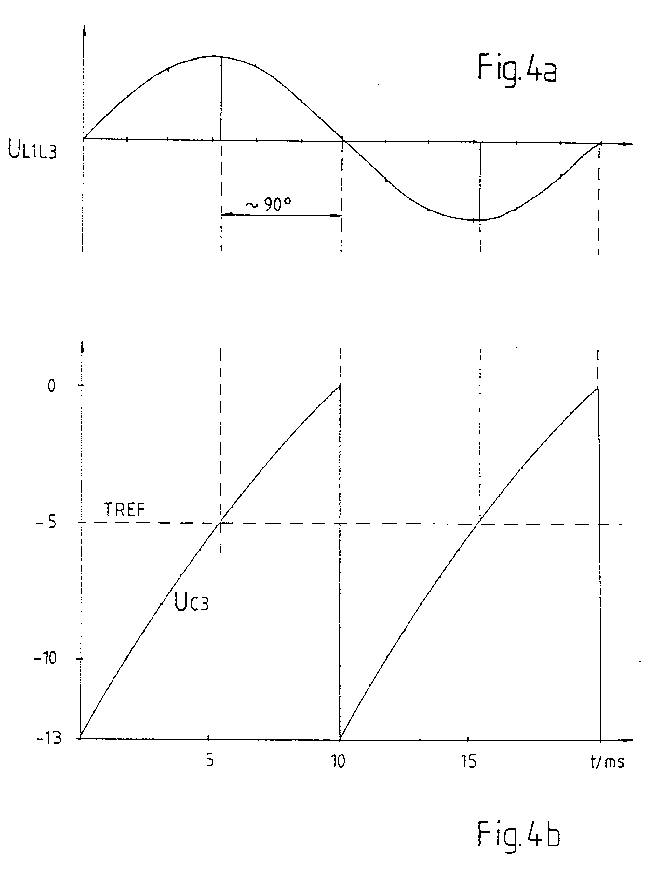

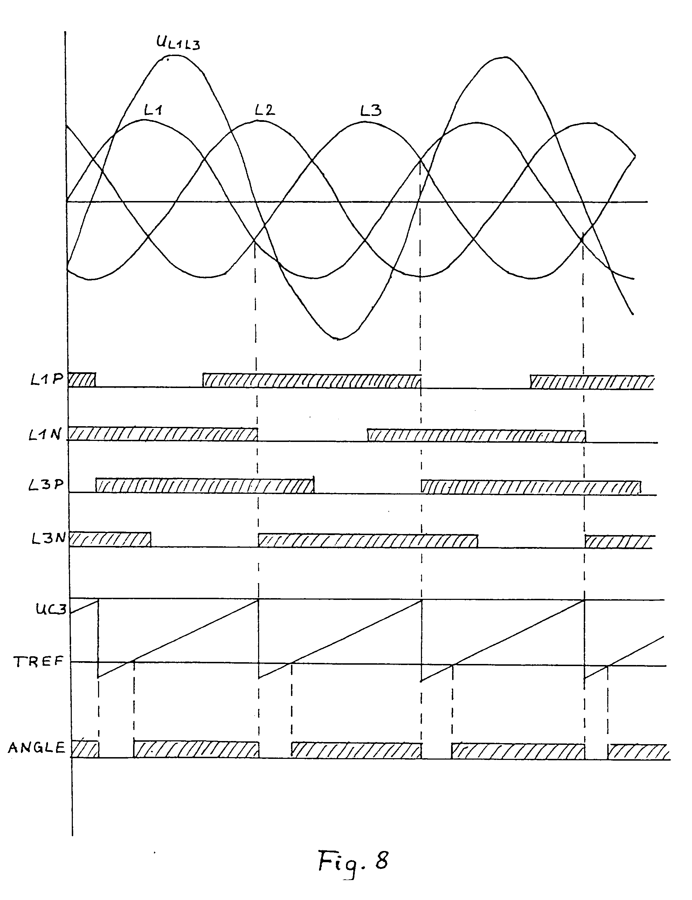

Fig. 3 shows the circuit used for generating the firing angle signal ANGLE. As input signals pulse-shaped voltages L1P, L1N, L3P and L3N are used (see Fig. 8). These signals are produced from the phase voltages, of which the pulse L1P is obtained when the positive phase voltage L1 is higher than the other phases voltages and, similarly, L1N is obtained when when the negative phase voltage L1 is lower the other phase voltages The voltage pulses L3P and L3N are obtained in the same way. These voltages are passed via diodes D1 D4 to the junction of resistors R1 and R2 and further through resistor R2 to the(-)input of an operational amplifier OP1. This input is connected to ground via capacitor C1, and resistor R1 is connected to the positive control voltage +V. The (+) input of the operational amplifier is also connected to this voltage via resistor R3. In addition, the (+ )input is connected to a voltage divider resistor R4 and a filtering capacitor C2. The signal obtained from the operational amplifier is passed via diode D5 and resistor R5 to the (+)input of another operational amplifier OP2, which is also connected to the negative control voltage -V via capacitor C3 and to the positive control voltage +V via variable resistor R6 and resistor R7 connected in series.

Fig. 4a represents the main voltage UL1L3 and Fig. 4b represents the sawtooth voltage UC3 produced across capacitor C3 by the integrator consisting of resistor R5 and capacitor C3, this voltage being synchronized with the mains voltages. The (-)input of the operational amplifier OP2 is fed by a firing reference signal TREF, which is compared with the sawtooth wave UC3 to set the firing angle e.g. to approx. 90° as in Fig.4a (or to another value as in Fig. 8). The result of the comparison is obtained as firing angle signal ANGLE from the output of operational amplifier OP2, which is also connected to the positive control voltage +V via resistor R7 and to the negative control voltage -V via capacitor C4.

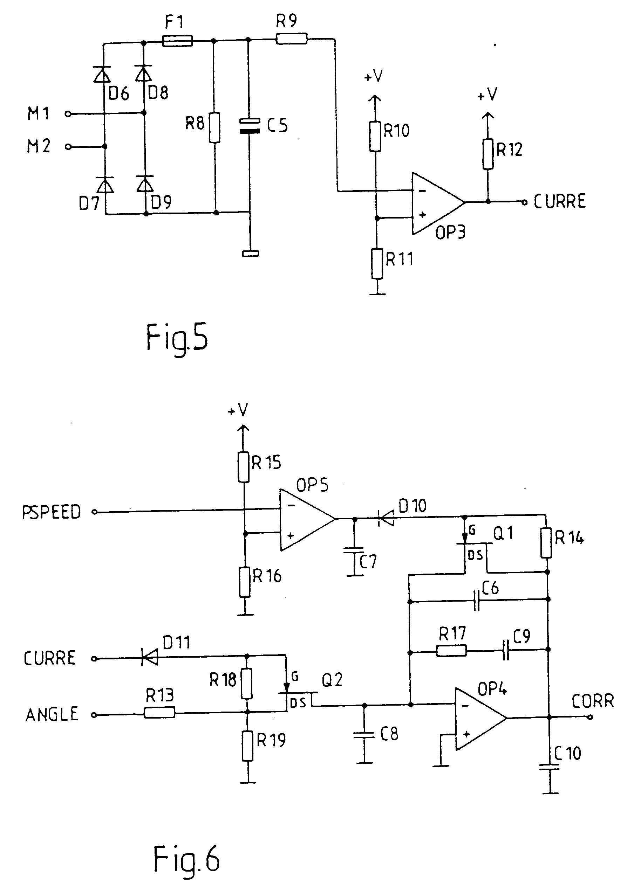

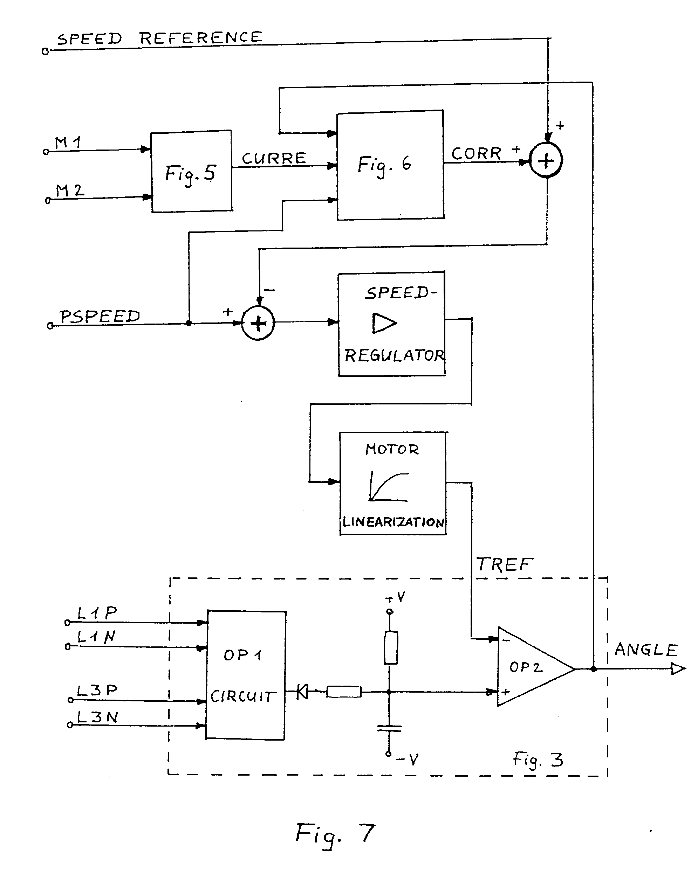

The signal CURRE generated by the circuit in Fig. 5 is used to measure the zero point of the motor current signal to be measured is applied to the input terminals M1 and M2 of a diode bridge rectifier D6 - D9. The signal is passed via fuse F1, resistor R8 and capacitor C5, connected in parallel, and resistor R9 to the (-)input of operational amplifier OP3. The positive input is fed by a reference voltage produced from the positive control voltage +V by means of a voltage divider consisting of resistors R10 and R11. The reference voltage defines the minimum motor current above which a CURRE signal is produced. The above-mentioned CURRE signal is obtained from the output of the operational amplifier, which is connected to the positive control voltage +V via resistor R12.

Fig. 6 shows an integrating circuit which is needed for the generation of the correction signal CORR. The main parts of the integrator are operational amplifier OP4, resistors R13 and R17 and capacitor C9. The integrator is reset by a FET Q1 connected across capacitor C9 and resistor R17. The FET has a control resistor R14 connected to its gate, and it is controlled by a signal PSPEED proportional to the motor speed, which is applied to the (-)input of operational amplifier OP5. The positive input is fed by a reference voltage produced via voltage division by resistors R16 and R17. The output of the operational amplifier is passed via filtering capacitor C7 and diode D10 to the gate G of FET Q1. Capacitors C6, C8 and C10 are filtering capacitors connected to the operational amplifier. The signal CURRE is applied via diode D11 to the gate of FET Q2. The gate of this FET is connected to a control resistor R19 and its D-electrode is connected to a resistor connected to ground. The firing angle signal ANGLE is applied via FET Q2 to the (-)input of operational amplifier OP4.

As long as the speed PSPEED is low, the output of operational amplifier OP5 remains high and FET Q1 resets the integrator. When the speed voltage PSPEED exceeds the reference voltage defined by the ratio of the voltage divider resistors R15 and R16, the output of operational amplifier OP5 is low and the integrator is released.

The integrator is set to a point where the firing angle signal ANGLE is at the middle of the current signal CURRE measuring the zero point of the motor current. If the firing angle is on the trailing edge of the zero point pulse, this means that the current has not yet reached a sinusoidal form, so the speed reference is increased by increasing the CORR signal. Consequently, the firing angle is increased until the current becomes sinusoidal. On the other hand, if the firing angle has become too large, i.e. the regulation system is saturated, the firing angle will be on the leading edge of the zero point pulse. In this case, the speed reference is reduced by lowering the CORR signal.

Since the system described above employs an integrating controller, it always causes the motor current to become sinusoidal in all loading conditions, even when the motor is acting as a generator. On the other hand, it does not allow the main controller to become saturated, so the magnitude of the load is always known.

Fig. 7 shows a block diagram of a motor speed regulator utilizing a speed reference correction according to the invention. The firing signal ANGLE for the thyristors is produced by correcting the basic speed reference value with a correction signal CORR.

It is obvious to a person skilled in the art that different embodiments of the invention are not restricted to the examples described above, but that they may instead be varied within the scope of the following claims. The regulation procedure of the invention can also be implemented using a microprocessor.

## Claims

1. Procedure for regulating the speed reference of a squirrel-cage elevator motor (1) fed by a voltage converter (6,7) provided with solid-state switches, **characterized** in that the speed reference is regulated using a speed reference correction signal (CORR) which adjusts the speed reference to a value at which the firing angle of the solid-state switches corresponds to the zero point of sinusoidal motor current.

2. Procedure according to claim 1, **characterized** in that the correction signal (CORR) is generated by an integrating controller (OP4,R13,R17,C9).

3. Procedure according to claim 1 or 2, in which the rotational speed of the motor is measured, **characterized** in that the integrating controller used for generating the correction signal functions when the rotational speed of the motor is at least close to the nominal maximum speed, and when the rotational speed of the motor is lower, a signal proportional to the rotational speed resets said controller, and that the correction signal (CORR) is generated from a firing angle signal (ANGLE) corresponding to the firing angle of the solid-state switches.

4. Procedure according to any one of the preceding claims, in which procedure the motor current is measured, **characterized** in that when the motor current is lower than a certain value a signal (CURRE) is generated inhibiting the access of the firing angle signal (ANGLE) into the integrator, in which case the correction signal (CORR) remains unchanged, and when said current exceeds a certain value, the signal (CURRE) enables the firing angle signal (ANGLE) to be fed into the integrator to adjust the speed reference.

5. Procedure according to any one of the preceding claims, **characterized** in that when the firing angle is on the trailing edge of the pulse of the signal (CURRE) indicating the zero point, the speed reference is increased by increasing the correction signal (CORR), when the firing angle is on the leading edge of the pulse of the signal (CURRE) indicating the zero point, the speed reference is lowered by lowering the correction signal (CORR), in which case the firing angle is reduced.

## Patentansprüche

1. Verfahren zum Regulieren des Geschwindigkeits-Sollwertes eines Kurzschlußläufer-Aufzugmotors (1), der durch einen mit Halbleiterschaltern versehenen Spannungswandler (6,7) gespeist wird,
dadurch **gekennzeichnet**,
daß der Geschwindigkeits-Sollwert durch Verwendung eines Geschwindigkeits-Sollwert-Korrektursignals (CORR) geregelt wird, welcher den Geschwindigkeits-Sollwert auf einen Wert einstellt, bei welchem der Zündwinkel der Halbleiterschalter zum Nullpunkt des sinusförmigen Motorstroms korreliert ist.

2. Verfahren nach Anspruch 1,
dadurch **gekennzeichnet**,
daß das Korrektursignal (CORR) durch einen integrierenden Regler (OP4, R13, R17, C9) generiert wird.

3. Verfahren nach Anspruch 1 oder 2, bei welchem die Drehzahl des Motors gemessen wird,
dadurch **gekennzeichnet**,
daß der für die Generierung des Korrektursignals verwendete integrierende Regler arbeitet, wenn die Drehzahl des Motors zumindest nahe der nominalen Höchstdrehzahl ist, und daß, wenn die Drehzahl des Motors geringer ist, ein zur Drehzahl proportionales Signal den Regler zurücksetzt, und daß das Korrektursignal (CORR) aus einem Zündwinkelsignal (ANGLE) generiert wird, welches zum Zündwinkel der Halbleiterschalter korreliert ist.

4. Verfahren nach einem der vorhergehenden Ansprüche, bei welchem Verfahren der Motorstrom gemessen wird,
dadurch **gekennzeichnet**,
daß, wenn der Motorstrom einen bestimmten Wert unterschreitet, ein Signal (CURRE) generiert wird, das den Zugang des Zündwinkelsignals (ANGLE) zum Integrator verhindert, in welchem Fall das Korrektursignal (CORR) unverändert bleibt, und wenn der Strom einen gewissen Wert überschreitet, das Signal (CURRE) die Zuleitung des Zündwinkelsignals (ANGLE) in den Integrator zur Einstellung des Geschwindigkeits-Sollwertes ermöglicht.

5. Verfahren nach einem der vorhergehenden Ansprüche,
dadurch **gekennzeichnet**,
daß, wenn das Zündsignal auf der rückwärtigen Flanke des den Nullpunkt anzeigenden Signals (CURRE) liegt, der Geschwindigkeits-Sollwert durch Erhöhung des Korrektursignals (CORR) erhöht wird, und wenn der Zündwinkel auf der vorderen Kante des Impulses des den Nullpunkt anzeigenden Signals (CURRE) liegt, der Geschwindigkeits-Sollwert verringert wird, indem das Korrektursignal (CORR) verringert wird, in welchem Fall der Zündwinkel reduziert wird.

## Revendications

1. Procédé pour la régulation de la référence de vitesse d'un moteur d'ascenseur à cage d'écureuil (1) alimenté par un convertisseur de tension (6,7) comportant des commutateurs statiques, caractérisé en ce que la référence de vitesse est régulée au moyen d'un signal de correction de référence de vitesse (CORR) qui ajuste la référence de vitesse à une valeur à laquelle l'angle d'amorçage ou d'enclenchement des commutateurs statiques correspond au point zéro du courant sinusoïdal du moteur.

2. Procédé suivant la revendication 1, caractérisé en ce que le signal de correction (CORR) est engendré par une unité de commande à intégration (OP4,R13,R17, C9).

3. Procédé suivant la revendication 1 ou 2, dans lequel la vitesse de rotation du moteur est mesurée, caractérisé en ce que l'unité de commande à intégration utilisée pour engendrer le signal de correction fonctionne lorsque la vitesse de rotation du moteur est au moins proche de la vitesse maximale nominale et, lorsque la vitesse de rotation du moteur est plus faible, un signal proportionnel à la vitesse de rotation restaure ladite unité de commande, et en ce que le signal de correction (CORR) est engendré à partir d'un signal d'angle d'amorçage (ANGLE) correspondant à l'angle d'amorçage des commutateurs statiques.

4. Procédé suivant une quelconque des revendications précédentes, dans lequel on mesure le courant de moteur, caractérisé en ce que, lorsque le courant de moteur est inférieur à une certaine valeur, un signal (CURRE) est engendré et empêche l'accès du signal d'angle d'amorçage (ANGLE) dans l'intégrateur, et dans ce cas le signal de correction (CORR) reste inchangé, et, lorsque ledit courant dépasse une certaine valeur, le signal (CURRE) permet l'introduction du signal d'angle d'amorçage (ANGLE) dans l'intégrateur pour ajuster la référence de vitesse.

5. Procédé suivant une quelconque des revendications précédentes, caractérisé en ce que, lorsque l'angle d'amorçage est sur le bord arrière de l'impulsion du signal (CURRE) indiquant le point zéro, on augmente la référence de vitesse par augmentation du signal de correction (CORR) et, lorsque l'angle d'amorçage est sur le bord avant de l'impulsion du signal (CURRE) indiquant le point zéro, la référence de vitesse est réduite par diminution du signal de correction (CORR), et dans ce cas l'angle d'amorçage est réduit.
